# EUROPEAN PATENT APPLICATION

(11) **EP 2 492 323 A1**
(43) Date of publication of application: **29.08.2012**
(21) Application number: 11155524.9
(22) Date of filing: 23.02.2011
(51) Int. Cl.: C09D 127/12, C09D 5/16

(54) **Biofouling resistant composition**

(71) Applicant: Akzo Nobel Coatings International B.V., 6824 BM Arnhem (NL)
(72) Inventor: Galli, Giancarlo, 51017, PESCIA (PT) (IT); Martinelli, Elisa, 56122, PISA (IT); Chiellini, Emo, 56100, PISA (IT); Williams, David Neil, NEWCASTLE UPON TYNE, Tyne and Wear NE13 8AR (GB); Davies, Cait Marie, WHITLEY BAY, Tyne and Wear NE25 8QE (GB)
(74) Representative: Alferink, Petrus J.T.

(57) **Abstract**

This invention relates to a biofouling resistant coating composition which comprises a cured or cross-linked polymer and a polymer or oligomer derived from an ethylenically unsaturated fluorinated monomer with a hydrophilic spacer group. The polymer or oligomer derived from an ethylenically unsaturated fluorinated monomer with a hydrophilic spacer group comprising units selected from:
- monomer (A) of general formula (I):

X¹-(R¹X²)ₘ-(R²)ₙ-R_{f} (I)

where X¹ is an ethylenically unsaturated group, such as acryloxy, methacryloxy, vinyl or vinyloxycarbonyl,
R¹ is a linear or branched alkyl or aryl
m is an integer in the range 1-1000,
X² is O, S or NR⁴ where is R is H or alkyl
R² is a substituted or unsubstituted linear or branched alkyl,
n is 0 or 1,
R_{f} is a perfluorinated linear or branched C₁-C₂₀ alkyl;
and
- Monomer (B) of general formula (II):

X²-(R³)ₘ-[Si(R⁴)₂ -O]p -Si(R⁴)₃ (II)

where X² is an ethylenically unsaturated group, such as acryloxy, methacryloxy, vinyl or vinyloxycarbonyl,
R³ is a substituted or unsubstituted linear or branched alkyl,
m is 0 or 1,
R⁴ is a linear or branched alkyl or aryl, and
p is an integer in the range 1-10000.

## Description

The invention pertains to a biofouling resistant composition which comprises a cured or cross-linked polymer and a polymer or oligomer derived from an ethylenically unsaturated fluorinated monomer with a hydrophilic spacer group.

Man-made structures such as boat hulls, buoys, drilling platforms, dry dock equipment, oil production rigs, and pipes which are immersed in water are prone to fouling by aquatic organisms such as green and brown algae, barnacles, mussels, and the like. Such structures are commonly of metal, but may also comprise other structural materials such as concrete. This fouling is a nuisance on boat hulls, because it increases frictional resistance during movement through the water, the consequence being reduced speeds and increased fuel costs. It is a nuisance on static structures such as the legs of drilling platforms and oil production rigs, firstly because the resistance of thick layers of fouling to waves and currents can cause unpredictable and potentially dangerous stresses in the structure, and, secondly, because fouling makes it difficult to inspect the structure for defects such as stress cracking and corrosion. It is a nuisance in pipes such as cooling water intakes and outlets, because the effective cross-sectional area is reduced by fouling, with the consequence that flow rates are reduced.

The commercially most successful methods of inhibiting fouling have involved the use of anti-fouling coatings containing substances toxic to aquatic life, for example tributyltin chloride or cuprous oxide. Such coatings, however, are being regarded with increasing disfavour because of the damaging effects such toxins may have if released into the aquatic environment. There is accordingly a need for non-fouling coatings which do not release markedly toxic materials.

It has been known for many years, for example as disclosed in GB 1,307,001 and US 3,702,778, that certain silicone rubber coatings may partially resist fouling by aquatic organisms. It is believed that such coatings present a surface to which the organisms cannot easily adhere, and they can accordingly be called fouling release rather than anti-fouling coatings. Silicone rubbers and silicone compounds generally have very low toxicity. The disadvantage of this system when applied to boat hulls is that although the accumulation of marine organisms is reduced, relatively high vessel speeds are needed to remove all fouling species. Thus, in some instances, it has been shown that for effective release from a hull that has been treated with such a coating, it is necessary to sail with a speed of at least 14 knots. For this reason silicone rubbers have gained limited commercial success and there is a need for improvement of the anti-fouling and fouling release properties of these environmentally benign coatings.

Fluorine containing organosilicones are known from WO2007/102741 which discloses a fouling release composition comprising a cured or crosslinked polysiloxane and a fluorinated polymer.

The disadvantage of this prior art fouling release system is that although it reduces the adhesion of fouling and thus the hydrodynamic forces required on a moving vessel to remove fouling organisms, it does not appreciable resist fouling settlement.

There is a need for a system showing improved biofouling resistance in addition to fouling release performance. This will lead to lower drag at vessel speeds below the minimal speed necessary to remove the fouling organisms. For the currently known systems this minimal vessel speed necessary to remove fouling organisms is in the range from about 10 - 15 knots.

The present invention provides a biofouling resistant coating composition which comprises
- a curable or crosslinkable polymer and
- a polymer or oligomer derived from an ethylenically unsaturated fluorinated monomer with a hydrophilic spacer group.

Within the framework of the present invention, biofouling or biological fouling is the undesirable accumulation of microorganisms, plants, algae, and/or animals on wetted structures.

Within the framework of the present invention a hydrophilic spacer group is a group of the general structure -[CHR¹CHR²X]-, wherein R¹ and R² are independently selected from hydrogen and an alkyl, aryl group and X is O, S or NR³ where R³ is hydrogen or alkyl.

### THE CURABLE OR CROSSLINKABLE POLYMER

In one embodiment, the cured or cross-linked polymer that is present in the biofouling resistant coating composition according to the present invention is an organosiloxane-containing polymer. This organosiloxane-containing polymer may comprise a repeating unit of the general structure -[SiR¹R²-O]-, wherein R¹ and R² are independently selected from hydrogen, alkyl, aryl, aralkyl, and a vinyl group.

In a further embodiment of the cured or cross-linked polymer that is present in the biofouling resistant coating composition according to the present invention the organosiloxane-containing polymer comprises a repeating unit of the general structure -[SiR¹R²-O]-, wherein R¹ and R² are independently selected from methyl and phenyl. Another preferred organosiloxane-containing polymer is a polymer wherein R¹ and R² are methyl.

The curable or crosslinkable polymer that is present in the biofouling resistant coating composition according to the present invention may be a polyorganosiloxane or a mixture of different polyorganosiloxane. For example, a mixture of two or more polyorganosiloxanes of different viscosity.

The polyorganosiloxane has one or more, preferably two or more reactive functional groups such as hydroxyl, alkoxy, acetoxy, carboxyl, hydrosilyl, amine, epoxy, vinyl or oxime functional groups.

Alternatively, the curable or crosslinkable polymer may be as described in WO2008132196, wherein the polymer is a polyorganosiloxane polyoxyalkylene block copolymer of the form PS - (A - PO - A - PS)n, wherein PS represents a polyorganosiloxane block, PO represents a polyoxyalkylene block, A represents a divalent moiety, and n has a value of at least 1.

Alternatively, siloxane-acrylic hybrid polymers, are suitable for use as the curable or crosslinkable polymer in the biofouling resistant coating composition according to the present invention.

Other suitable curable or crosslinkable polymers include those as disclosed in WO 99/33927, particularly the polymers disclosed on page 12, lines 23-31, viz. an organohydrogen polysiloxane or a polydiorganosiloxane. The polysiloxane may, for example, comprise a copolymer of diorganosiloxane units with organohydrogen siloxane units and/or with other diorganosiloxane units, or a homopolymer of organohydrogen siloxane units or of diorganosiloxane units.

Polysiloxanes that can be cross-linked by a hydrosilylation reaction can also be used. Such polymers are known as "hydride silicones" and are disclosed, for instance, in EP 874032-A2 on page 3, viz. a polydiorganosiloxane of the formula R'- (SiOR'₂) ₘ-SiR'₃, wherein each R' independently is a hydrocarbon or fluorinated hydrocarbon radical, at least two R' radicals per molecule being unsaturated, or hydrogen, at least two R' radicals per molecule being hydrogen, and m has an average value in the range of about 10-1,500. Cyclic polydiorganosiloxanes analogous to those of the formula above may also be employed. The hydride silicone preferably is a hydrogen polydimethylsiloxane. The preferred number average molecular weight range for the hydride silicone is in the range of about 1,000-28,000, corresponding to a value of m in the range of about 13-380.

Depending on the type of polymer, the coating composition may require a cross-linker. The presence of a cross-linker is only necessary if the polymer cannot be cured by condensation. This will depend on the type and number of functional groups that are present in said polymer. If the polymer comprises alkoxy-silyl groups, the presence of a small amount of water, and optionally a condensation catalyst is generally sufficient to achieve full cure of the coating after application. For these compositions, atmospheric moisture is generally sufficient to induce curing, and as a rule it will not be necessary to heat the coating composition after application.

The optionally present cross-linker can be a cross-linking agent comprising a functional silane and/or one or more of any of acetoxy, alkoxy, amido, alkenoxy and oxime groups. Examples of such cross- linking agents are presented in WO 99/33927, page 19, line 9, through page 21, line 17. Mixtures of different crosslinkers can also be used.

In one embodiment, the crosslinking agent is present in an amount of 1 to 25wt% based on the total weight of the coating composition.

Where the polymer coating composition is crosslinkable, the compositon may optionally comprise a catalyst. Examples of suitable catalysts are the carboxylic acid salts of various metals, such as tin, zinc, iron, lead, barium, and zirconium. The salts preferably are salts of long-chain carboxylic acids, for example dibutyltin dilaurate, dibutyltin dioctoate, iron stearate, tin (II) octoate, and lead octoate. Further examples of suitable catalysts include organobismuth and organotitanium compounds and organo-phosphates such as bis(2-ethyl-hexyl) hydrogen phosphate. Other possible catalysts include chelates, for example dibutyltin acetoacetonate. Further, the catalyst may comprise a halogenated organic acid which has at least one halogen substituent on a carbon atom which is in the [alpha]-position relative to the acid group and/or at least one halogen substituent on a carbon atom which is in the [beta]-position relative to the acid group, or a derivative which is hydrolysable to form such an acid under the conditions of a condensation reaction.

Alternatively, the catalyst may be as described in any of W02007122325A1, WO2008055985A1, WO2009106717A2, WO2009106718A2, WO2009106719A1, WO2009106720A1, WO2009106721 A1, WO2009106722A1, WO2009106723A1, WO2009106724A1, WO2009103894A1, WO2009118307A1, WO2009133084A1, WO2009133085A1, WO2009156608A2, and WO2009156609A2.

Preferably the catalyst is present in an amount of 0.05 to 4wt% based on the total weight of the coating composition.

### THE POLYMER OR OLIGOMER DERIVED FROM AN ETHYLENICALLY UNSATURATED FLUORINATED MONOMER WITH A HYDROPHILIC SPACER GROUP

The inventors of the present invention have realised that the presence of the hydrophilic spacer group in the antifouling composition significantly improves the biofouling resistant properties.

The polymer or oligomer of the biofouling resistant coating composition of the present invention in one embodiment comprises units selected from:
- Monomer (A) of general formula (I):

   X¹-(R¹X²)ₘ-(R²)ₙ-R_{f} (I)

   Where X¹ is an ethylenically unsaturated group, such as acryloxy, methacryloxy, vinyl or vinyloxycarbonyl,
   R¹ is a linear or branched alkyl or aryl
   m is 1-1000
   X² is O, S or NR⁴ where is R is H or alkyl
   R² is a substituted or unsubstituted linear or branched alkyl,
   n is 0 or 1,
   R_{f} is a perfluorinated linear or branched C₁-C₂₀ alkyl;
   and:
- Monomer (B) of general formula (II):

   X²-(R³)ₘ-[Si(R⁴)₂ -O]ₚ -Sᵢ(R⁴)₃ (II)

   Where X² is an ethylenically unsaturated group, such as acryloxy, methacryloxy, vinyl or vinyloxycarbonyl,
   R³ is a substituted or unsubstituted linear or branched alkyl,
   m is 0 or 1,
   R⁴ is a is a linear or branched alkyl or aryl
   p is an integer 1-10000,

The hydrophilic spacer group in this representation is present in Monomer (A) as (R¹X²)_{m.}

In one embodiment for Monomer (A), X¹ is acryloxy, R¹ is a linear C₂ alkyl, m is 5, X² is O, R² is a unsubstituted linear alkyl group, n is 1 and R_{f} is a perfluorinated linear C₈ alkyl.

In the same or another embodiment, for Monomer (B), X² is a methacryloxy, R³ an unsubstituted linear alkyl, m is 1, R⁴ is a methyl, p is 11.

Optionally, the polymer or oligomer of the biofouling resistant coating composition can contain further ethylenically unsaturated monomers, more especially from one or more ethylenically unsaturated monomers selected from unsaturated aliphatic hydrocarbons, for example, ethylene, propylene and butylene; unsaturated halogenated hydrocarbons, for example, vinyl chloride, vinyl fluoride, vinylidene chloride and vinylidene fluoride; vinyl aromatic compounds, for example, vinyl pyridine, vinylnaphthalene, and styrene (including ring-substituted styrenes); unsaturated esters, amides and nitriles; N-vinyl compounds, for example, N-vinyl pyrrolidone, N-vinyl carbazole and N-vinyl caprolactam; acrylates and methacrylates, for example ;acrylamides and methacrylamides; acrylonitrile and vinyl esters, such as vinyl acetate.

Preferably the proportion of Monomer (A) in the polymer or oligomer of the biofouling resistant coating composition ranges from 1 to 99 % by weight based on the overall monomeric composition of the polymer or oligomer. Preferably the proportion of Monomer (B) in the polymer or oligomer of the biofouling resistant coating composition ranges from 1 to 99 % by weight based on the overall monomeric composition of the polymer or oligomer. Preferably the proportion of other ethylenically unsaturated monomers in the polymer or oligomer of the biofouling resistant coating composition is no more than 50 % by weight based on the overall monomeric composition of the polymer or oligomer.

Preferably, the weight ratio of Monomer (A) to Monomer (B) in the polymer or oligomer is from 1:20 to 1:5.

The present invention also provides a method for inhibiting fouling of a substrate in an aquatic environment by applying the biofouling resistant compositions of the present invention to the substrate.

The polymer or oligomer of the biofouling resistant coating composition can be used in a number of systems.

### FILLERS, PIGMENTS & SOLVENTS

The biofouling resistant coating composition according to the invention may also comprise one or more fillers, pigments, catalysts, and/or solvents. Examples of suitable fillers are barium sulphate, calcium sulphate, calcium carbonate, silicas or silicates (such as talc, feldspar, and china clay), aluminium paste/flakes, bentonite or other clays. Some fillers such as fumed silica may have a thixotropic effect on the coating composition. The proportion of fillers may be in the range of from 0 to 25 wt%, based on the total weight of the coating composition. Preferably the clay is present in an amount of from 0 to 1 wt% and preferably the thixotrope is present in an amount of from 0 to 5 wt%, based on the total weight of the coating composition.

Examples of suitable pigments are black iron oxide, red iron oxide, yellow iron oxide, titanium dioxide, zinc oxide, carbon black, graphite, red molybdate, yellow molybdate, zinc sulfide, antimony oxide, sodium aluminium sulfosilicates, quinacridones, phthalocyanine blue, phthalocyanine green, black iron oxide, indanthrone blue, cobalt aluminium oxide, carbazoledioxazine, chromium oxide, isoindoline orange, bis-acetoaceto-tolidiole, benzimidazolone, quinaphthalone yellow, isoindoline yellow, tetrachloroisoindolinone, and quinophthalone yellow. The proportion of pigments may be in the range of from 0 to 25 wt%, based on the total weight of the coating composition. Suitable solvents include aromatic hydrocarbons, alcohols, ketones, esters, and mixtures of the above with one another or an aliphatic hydrocarbon. Preferable solvents include methyl isoamyl ketone and/or xylene. Preferably the solvent is present in an amount of 0-40wt%, based on the total weight of the composition.

In one embodiment the fouling resistant coating composition comprises a fluid, which may or not be reactive and may or may not be incompatible. Preferably the fluid is incompatible. In the context of the present invention an incompatible fluid means a silicone, organic or inorganic molecule or polymer, usually a liquid, but optionally an organosoluble grease or wax which is substantially immiscible with the elastomer network of the biofouling resistant finish coat. The fluid will exist at the surface of the finish coat and augment its foul release properties.

Examples of suitable fluids include:
a) Linear and trifluoromethyl branched fluorine end-capped perfluoropolyethers (eg Fomblin Y®, Krytox K® fluids, or Demnum S® oils);
b) Linear di-organo (OH) end-capped perfluoropolyethers (eg Fomblin Z DOL®, Fluorolink E®);
c) Low MW polychlorotrifluoroethylenes (eg Daifloil CTFE® fluids)

In all cases, the fluid does not substantially take part in any cross-linking reaction. Other mono- and diorgano-functional end-capped fluorinated alkyl- or alkoxy- containing polymers or oligomers can also be used (eg carboxy-, ester-functional fluorinated alkyl- or alkoxy-containing polymers or oligomers).

Alternatively, the fluid can be a silicone oil, for example of the formula:

Q₃Si-O-(SiQ₂-O-)nSiQ₃

Wherein each group Q represents a hydrocarbon radical having 1-10 carbon atoms and n is an integer such that the silicone oil has a viscosity of 20 to 5000 mPa s. At least 10% of the groups Q are generally methyl groups and at least 2% of the groups Q are phenyl groups. Most preferably, at least 10% of the - SiQ2-O- units are methyl-phenylsiloxane units. Most preferably the silicone oil is a methyl terminated poly(methylphenylsiloxane). The oil preferably has a viscosity of 20 to 1000 mPa s. Examples of suitable silicone oils are sold under the trademarks Rhodorsil Huile 510V100 and Rhodorsil Huile 550 by Bluestar Silicones. The silicone oil improves the resistance of the coating system to aquatic fouling.

The fluid may also be an organosilicone as shown:

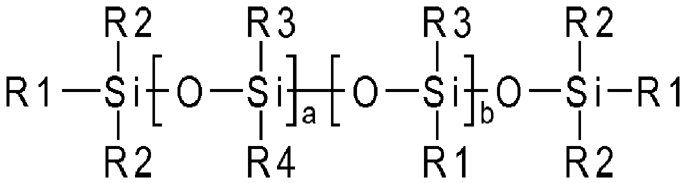

Wherein:
R1 may be the same or different and is selected from alkyl, aryl, and alkenyl groups, optionally substituted with an amine group, an oxygen-containing group of the formula OR5, wherein R5 is hydrogen or a C1-6 alkyl, and a functional group according the formula (I):

   -R6-N(R7)-C(O)-R8-C(O)-XR3

Wherein:
R6 is selected from alkyl, hydroxyalkyl, carboxyalkyl of 1 to 12 carbon atoms, and polyoxyalkylene of up to 10 carbon atoms; R7 is selected from hydrogen, alkyl, hydroxyalkyl, carboxyalkyl of 1 to 6 carbon atoms, and polyoxyalkylene of 1 to 10 carbon atoms; R7 may be bonded to R8 to form a ring;
R8 is an alkyl group with 1-20 carbon atoms;
R9 is hydrogen or an alkyl group with 1-10 carbon atoms, optionally substituted with oxygen- or nitrogen-containing groups;
X is selected from O, S and NH; provided that at least one R1-group in the organosilicone polymer is a functional group according to the above formula (I) or a salt derivative thereof;
R2 may be the same or different and is selected from alkyl, aryl, and alkenyl; R3 and R4, which may be the same or different, are selected from alkyl, aryl, capped or uncapped polyoxyalkylene, alkaryl, aralkylene, and alkenyl;
a is an integer from 0 to 50,000;
b is an integer from 0 to 100; and
a+b is at least 25.
R2, R3 and R4 preferably are independently selected from methyl and phenyl, more preferably methyl.
R6 preferably is an alkyl group with 1-12, more preferably 2-5 carbon atoms. R7 preferably is hydrogen or an alkyl group with 1-4 carbon atoms.
R8 preferably is an alkyl group with 2-10 carbon atoms.
R9 preferably is hydrogen or an alkyl group with 1-5 carbon atoms.
X preferably is an oxygen atom.
a+b preferably ranges from 100 to 300.

Preferably the fluid is present in 0.01 to 10wt%, based on the total weight of the coating composition. Most preferably the fluid is present in the range of 2 to 7wt%.

### Application:

The biofouling resistant coating composition according to the present invention can be applied by normal techniques, such as dipping, brushing, roller coating, or spraying (airless and conventional). To achieve proper adhesion to the substrate it is preferred to apply the biofouling resistant coating composition to a primed substrate. The primer can be any conventional primer/sealer coating system. Good results were found, in particular with respect to adhesion, when using a primer that comprises an acrylic siloxyfunctional polymer, a solvent, a thixotropic agent, a filler, and, optionally, a moisture scavenger. Such a primer is disclosed in WO 99/33927. It is also possible to apply the coating composition according to the present invention on a substrate containing an aged anti-fouling coating layer. Before the coating composition according to the present invention is applied to such an aged layer, this old layer is cleaned by highpressure water washing to remove any fouling.

The primer disclosed in WO 99/33927 can be used as a tie coat between the aged coating layer and the coating composition according to the present invention. After the coating has been cured, it can be immersed immediately and gives immediate anti-fouling and fouling release protection. As indicated above, the coating composition according to the present invention has very good biofouling resistant properties. This makes these coating compositions very suitable for use as anti-fouling or non-fouling coatings for marine applications. The coating can be used for both dynamic and static structures, such as boat hulls, aquaculture equipment, underwater instrumentation, buoys, drilling platforms, water intakes, oil production rigs, and pipes which are immersed in water. The coating can be applied on any substrate that is used for these structures, such as metal, concrete, wood or fibre-reinforced resin.

The invention will be elucidated with reference to the following examples.

### General procedure for the preparation of the copolymers

In a typical preparation of a copolymer, Monomethacryloxypropyl-terminated poly(dimethyl siloxane) (5.00 g, 5.0 mmol) and PEGylated-fluoroalkyl acrylate monomer (0.42 g, 0.6 mmol) were kept in a Pyrex vial under vacuum for 7-8 h prior to the reaction. Later, α,α,α-trifluorotoluene (17 ml) was added as solvent with α,α'-azoisobutyronitrile (43 mg). The solution was purged with dry nitrogen for 10 min and then degassed by four freeze-pump-thaw cycles. The vial was sealed and the polymerization reaction was let to proceed under stirring at 65°C for 60 h. The polymer was precipitated into methanol (400 ml) and kept under vigorous stirring for nearly 30 h. It was then centrifuged, separated from the supernatant solution and purified by repeated precipitations from chloroform solutions into methanol (yield 70%).

A series of fluorinated siloxane copolymers were prepared with varying content of PEGylated-fluoroalkyl acrylate monomer by changing the feed ratio of the two co-monomers.

The fluorinated siloxane copolymer contained 10 mol% PEGylated-fluoroalkyl acrylate co-units and was used in the following formulation examples.

### Formulation example 1

| A 3-pack coating composition | |
|---|---|
| Base: | 30g silanol terminated polydimethylsiloxane 0.3g fluorinated siloxane polymer |
| Curing agent: | 0.75g poly(diethoxysiloxane) |
| Catalyst: | 0.012g dibutyltin diacetate |

### Formulation example 2

| A 3-pack coating composition | |
|---|---|
| Base: | 30g silanol terminated polydimethylsiloxane |
| | 1.2g fluorinated siloxane polymer |
| Curing agent: | 0.75g poly(diethoxysiloxane) |
| Catalyst: | 0.012g dibutyltin diacetate |

Compositions of formulation examples 1 and 2 were applied by brush onto wood substrates primed with an anticorrosive undercoat. For static anti-fouling assessment the coated substrates were immersed in under various conditions, viz.:
- a tropical marine environment known for its heavy hard-shelled and soft-bodied animal fouling
- a European saltwater site and
- a marine estuary known for its weed, slime, hard-bodied and soft-bodied animal fouling.

The accumulated fouling was assessed after different immersion periods. Fouling accumulation on the coatings formed from formulation examples 1 & 2 were found to be less than that of control substrates coated only with the anticorrosive primer (CT), and less than that of a standard substrate coated with a silicone coating not containing the fluorinated siloxane copolymer (ST).

| Immersed at saltwater site | | | | | | | |
|---|---|---|---|---|---|---|---|
| Example | % slime fouling | % weed fouling | % soft bodied fouling | % hard bodied fouling | % total fouling | Fouling release rating | Weeks immersed |
| 1 | 72 | 0 | 0 | 22 | 94 | 1 | 18 |
| 2 | 68 | 0 | 4 | 6 | 78 | 1 | 18 |
| ST | 29 | 0 | 0 | 57 | 86 | 2 | 18 |
| CT | 5 | 1 | 2 | 92 | 100 | 4 | 18 |

| Immersed at estuary site | | | | | | | |
|---|---|---|---|---|---|---|---|
| Example | % slime fouling | % weed fouling | % soft bodied fouling | % hard bodied fouling | % total fouling | Fouling release rating | Weeks immersed |
| 1 | 16 | 0 | 0 | 8 | 24 | 1 | 38 |
| 2 | 8 | 0 | 0 | 3 | 11 | 1 | 38 |
| ST | 35 | 0 | 1 | 10 | 45 | 1 | 38 |
| CT | 5 | 3 | 4 | 88 | 100 | 3 | 38 |

| Immersed at tropical site | | | | | | | |
|---|---|---|---|---|---|---|---|
| Example | % slime fouling | % weed fouling | % soft bodied fouling | % hard bodied fouling | % total fouling | Fouling release rating | Weeks immersed |
| 1 | 27 | 0 | 2 | 3 | 32 | 1 | 19 |
| 2 | 47 | 0 | 0 | 3 | 50 | 1 | 19 |
| ST | 36 | 0 | 8 | 21 | 65 | 2 | 19 |
| CT | 5 | 0 | 19 | 76 | 100 | 4 | 19 |
| ST = Standard - a silicone coating not containing a fluorinated siloxane polymer | | | | | | | |
| CT = Control | | | | | | | |
| *Fouling release properties rated according to ease with which fouling can be removed by rubbing with a soft brush: | | | | | | | |
| 1 - very easy, 2 - fairly easy, 3 - quite difficult, 4 - very difficult | | | | | | | |

The experimental data clearly shows that polymers according to the present invention with a hydrophilic spacer group render greater foul release properties in biofouling resistant compositions than the standard and control foul release coatings.

## Claims

1. A biofouling resistant coating composition which comprises a cured or cross-linked polymer and a polymer or oligomer derived from an ethylenically unsaturated fluorinated monomer with a hydrophilic spacer group.

2. The biofouling resistant coating composition of claim 1 wherein the polymer or oligomer derived from an ethylenically unsaturated fluorinated monomer with a hydrophilic spacer group comprising units selected from:
- monomer (A) of general formula (I):
X¹-(R¹X²)ₘ-(R²)ₙ-R_{f} (I)
where X¹ is an ethylenically unsaturated group, such as acryloxy, methacryloxy, vinyl or vinyloxycarbonyl,
R¹ is a linear or branched alkyl or aryl
m is an integer in the range 1-1000,
X² is O, S or NR⁴ where is R is H or alkyl
R² is a substituted or unsubstituted linear or branched alkyl,
n is 0 or 1, and
R_{f} is a perfluorinated linear or branched C₁-C₂₀ alkyl;
and
- Monomer (B) of general formula (II):
X²-(R³)ₘ-[SI(R⁴)₂ -O]p -Si(R⁴)₃ (II)
where X² is an ethylenically unsaturated group, such as acryloxy, methacryloxy, vinyl or vinyloxycarbonyl,
R³ is a substituted or unsubstituted linear or branched alkyl,
m is 0 or 1,
R⁴ is a linear or branched alkyl or aryl, and
p is an integer in the range 1-10000.

3. The biofouling resistant coating composition according to claim 2, wherein for Monomer (A) X¹ is a acryloxy, R¹ is a linear C₂ alkyl, m is 5, X² is O, R² is a unsubstituted linear alkyl group, m is 1 and R_{f} is a perfluorinated linear C₈ alkyl and for monomer (B) X² is a methacryloxy, R³ an unsubstituted linear alkyl, m is 1, R⁴ is a methyl, p is 11.

4. A biofouling resistant coating composition which comprises a cured or cross-linked polymer and a polymer or oligomer according to claim 2 or 3.

5. A biofouling resistant coating composition according to claim 4 wherein the cured or cross-linked polymer is a polyorganosiloxane

6. A method for inhibiting biofouling of a substrate in an aquatic environment by applying the biofouling resistant composition of any of claims 1, 2, 3 , 4 or 5 to a substrate.

7. A polymer or oligomer derived from an ethylenically unsaturated fluorinated monomer with a hydrophilic spacer group comprising units selected from:
- monomer (A) of general formula (I):
X¹-(R¹X²)ₘ-(R²)ₙ-R_{f} (I)
where X¹ is an ethylenically unsaturated group, such as acryloxy, methacryloxy, vinyl or vinyloxycarbonyl,
R¹ is a linear or branched alkyl or aryl
m is an integer in the range 1-1000,
X² is O, S or NR⁴ where is R is H or alkyl
R² is a substituted or unsubstituted linear or branched alkyl,
n is 0 or 1, and
R_{f} is a perfluorinated linear or branched C₁-C₂₀ alkyl;
and
- Monomer (B) of general formula (II):
X²-(R³)ₘ-[Si(R⁴)₂ -O]p -Si(R⁴)₃ (II)
where X² is an ethylenically unsaturated group, such as acryloxy, methacryloxy, vinyl or vinyloxycarbonyl,
R³ is a substituted or unsubstituted linear or branched alkyl, m is 0 or 1,
R⁴ is a linear or branched alkyl or aryl, and
p is an integer in the range 1-10000.
